Europäisches Patentamt

European Patent Office

Office européen des brevets

(19)

(11) Numéro de publication: **0 041 223**
**B1**

(12) **FASCICULE DE BREVET EUROPEEN**

(45) Date de publication du fascicule du brevet: **19.10.83**

(51) Int. Cl.³: **E 02 B 15/04**

(21) Numéro de dépôt: **81104056.7**

(22) Date de dépôt: **27.05.81**

(54) Dispositif de ramassage de produits flottants sur une étendue liquide.

(30) Priorité: **30.05.80 FR 8012062**

(43) Date de publication de la demande:
**09.12.81 Bulletin 81/49**

(45) Mention de la délivrance du brevet:
**19.10.83 Bulletin 83/42**

(84) Etats contractants désignés:
**BE DE FR GB IT NL SE**

(56) Documents cités:
**FR - A - 2 070 016**
**FR - A - 2 200 859**
**US - A - 3 966 615**

(73) Titulaire: **ALSTHOM-ATLANTIQUE Société anonyme dite:**
**38, Avenue Kléber**
**F-75784 Paris Cedex 16 (FR)**

(72) Inventeur: **Valibouse, Bernard**
**36 avenue La Bruyère**
**F-38100 Grenoble (FR)**
Inventeur: **Bonazzi, Albert**
**Rue de la Fontaine**
**F-38610 Gieres (FR)**

(74) Mandataire: **Weinmiller, Jürgen et al,**
**Zeppelinstrasse 63**
**D-8000 München 80 (DE)**

Courier Press, Leamington Spa, England.

Dispositif de ramassage de produits flottants sur une étendue liquide

L'invention est relative à un dispositif de ramassage de produits flottants tels que des hydrocarbures, répandus à la surface d'une étendue liquide, comme la mer.

Les dispositifs de ramassage classiques sont, soit statiques, soit dynamiques. Dans ce dernier cas, voir par exemple FR - A - 2 070 016, ces dispositifs sont assujettis à un bateau opérant à faible vitesse, ce qui implique une vitesse de collecte lente. D'autre part, ces dispositifs, qui sont efficaces par temps calme, perdent en grande partie leur efficacité par mer agitée.

L'invention a pour but un dispositif susceptible d'opérer rapidement et avec efficacité, même par mer agitée. Ce résultat est atteint en dissociant les organes de séparation de la couche superficielle d'hydrocarbures flottants des organes de collecte en liaison avec l'utilisation d'un bateau relativement rapide.

Les documents FR - A - 2 200 859 et US - A - 3 966 615 décrivent un dispositif de ramassage de produits flottants sur une étendue liquide comportant un organe séparateur et un organe collecteur entraînés par le déplacement d'un bateau. L'invention a pour objet un tel dispositif, et est caractérisée en ce que ledit organe séparateur est constitué par une structure en forme de plaque étroite et allongée s'étendant à l'extérieur du bateau et faisant par rapport au sens d'avancement du bateau un angle aigu $\theta$, ladite plaque étant immergée sur une partie de sa largeur et étant penchée d'un angle $\alpha$ par rapport à la surface de l'eau, l'organe collecteur comportant une gouttière placée contre le flanc du bateau et communiquant avec une capacité.

Selon une réalisation particulière de l'invention ladite plaque est plane.

Selon une autre réalisation particulière de la présente invention, ladite plaque est vrillée sur sa longueur de façon à faire varier ledit angle $\alpha$ sur la longueur de ladite plaque.

Selon une réalisation avantageuse de l'invention, ladite gouttière comporte une première partie légèrement inclinée sur l'horizontale, s'abaissant de l'avant vers l'arrière par rapport au sens d'avancement du bateau et une seconde partie sensiblement verticale se raccordant à l'extrémités arrière de la première partie.

Selon une réalisation particulièrement avantageuse de la présente invention, un tel dispositif comprenant un organe collecteur et un organe séparateur est placé des deux côtés du bateau.

L'invention sera bien comprise à la lumière de la description d'un exemple de réalisation de l'invention faite ci-après en référence au dessin annexé dans lequel:

La figure 1 donne en vue de dessus une représentation schématique montrant le principe de l'invention.

La figure 2 donne une représentation schématique montrant l'organe collecteur.

La figure 3 qui est une section selon III—III de la figure 1 montre l'inclinaison de l'organe séparateur par rapport à la surface de l'eau.

La figure 4 est une représentation schématique montrant une réalisation pratique possible de l'invention.

La figure 5 montre un détail de la figure 4.

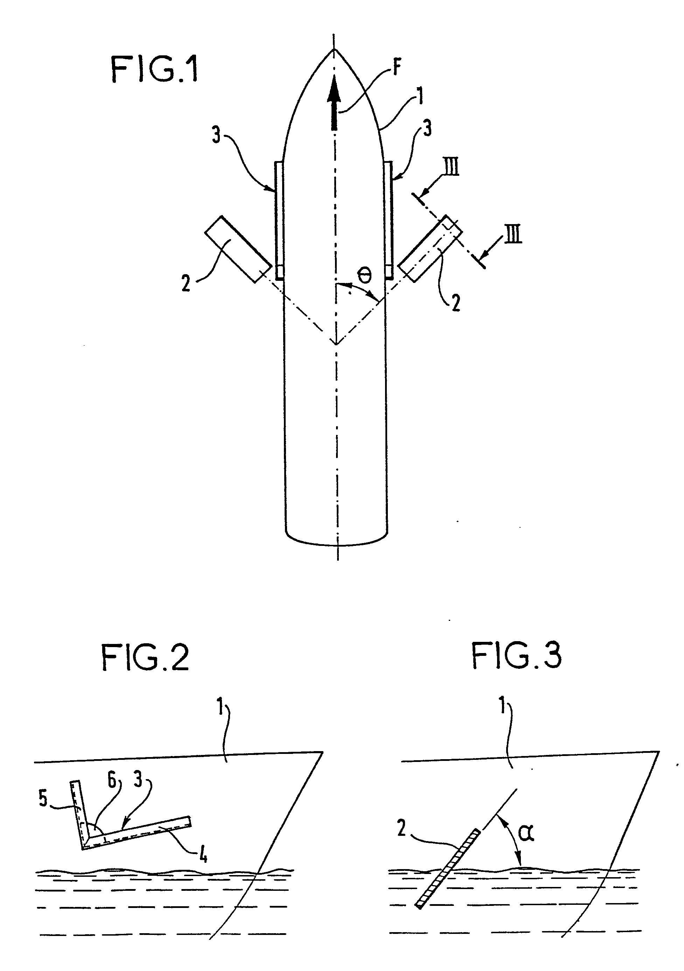

En se reportant à la figure 1, on voit un navire 1 dont le sens d'avancement est représenté par la flèche F. De chaque côté du navire, est placé un organe séparateur 2 destiné à récolter la couche de liquide surnageant à la surface de l'eau.

Il s'agit généralement de pétrole. Ces organes séparateurs 2 font un angle aigu $\theta$ par rapport à l'axe du navire. Un organe séparateur 2 est par exemple constitué par une plaque plane rectangulaire et elle est placée de manière à former un angle $\alpha$ (figure 3), par rapport à la surface de l'eau de manière que sous l'action combinée de la vitesse et de cet angle d'incidence $\alpha$, la couche de liquide superficielle rejaillise vers les flancs du bateau où le liquide est alors récolté grâce à des gouttières 3 jouant le rôle d'organes collecteurs.

La figure 2 montre une de ces gouttières qui comprend deux parties: une première partie 4 légèrement inclinée sur l'horizontale vers l'arrière et une partie 5 sensiblement verticale. Ces deux parties se réunissent vers un trou 6 communiquant avec un réservoir interne au bateau. Lorsque le liquide à récolter est un hydrocarbure lourd, on peut éventuellement percer les gouttières 3 de petits orifices permettant de séparer l'eau de l'hydrocarbure retenu par les gouttières.

Comme la distance séparant l'organe séparateur 2, des flancs du navire 1, varie le long des organes séparateurs 2, et que la force du jet de rejaillissement dépend de l'angle d'incidence $\alpha$, l'organe séparateur 2 peut être constitué non pas, par une plaque plane mais par une plaque vrillée de manière à faire varier, le long de cette plaque l'angle d'incidence $\alpha$.

De même, la section de la plaque 2 peut être concave telle qu'une échoppe de manière à réaliser une meilleure séparation, et la courbure peut être calculée de manière à optimiser le jet du pétrole récolté contre les flancs du bateau.

De même, les angles $\theta$ et $\alpha$ sont déterminés par l'homme de l'art par l'expérience selon la vitesse du bateau, l'enfoncement de la plaque 2 dans l'eau etc.

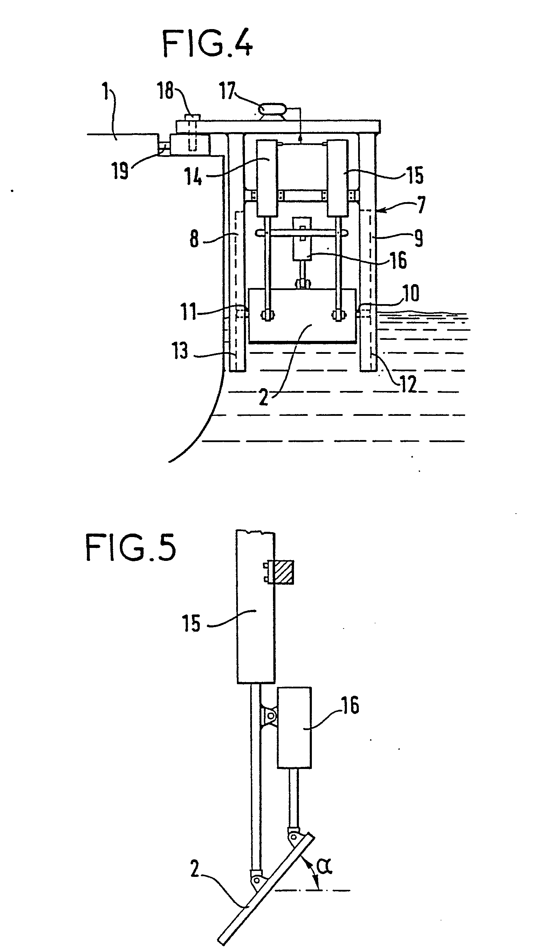

Les figures 4 et 5 montrent une manière, parmi d'autres possibles, de lier l'organe de séparation 2 au navire 1. Sur ces figures, les gouttières n'ont pas été représentées.

La plaque 2 est placée à l'intérieur d'un portique 7 et peut coulisser entre ses deux montants verticaux 8 et 9 grâce à la coopération de tétons 10 et 11 solidaires de la plaque 2 coulissant dans des rainures 12 et 13 des montants verticaux. L'enfoncement de la plaque 2 dans l'eau est commandé par des vérins 14 et 15 dont les tiges sont articulées à la plaque 2 sur la ligne joignant les tétons 10 et 11.

L'angle $\alpha$ d'incidence de la plaque 2 est commandé par un vérin 16 dont le corps est lié aux tiges des vérins 14 et 15 de manière à ce que l'angle d'incidence $\alpha$ ne varie pas lorsque les vérins 14 et 15 sortent plus ou moins leur tige.

Pour un angle d'incidence $\alpha$ donné, l'effort exercé, contre la plaque 2 dépend de son enfoncement dans l'eau, comme on souhaite avoir un enfoncement constant quelque soit l'état de la mer, on réalise une régulation de l'enfoncement, choisi au départ, en mesurant la pression d'huile dans le corps des vérins, à cet effet un capteur de pression 17 réalise cette mesure et, en fonction de la variation de cette pression, un régulateur non représenté agit sur les vérins 14 et 15.

L'angle $\theta$ de la plaque 2 par rapport à l'axe du navire est réglé par le pivotement du portique 7 autour d'un axe 18. De même on peut faire pivoter l'ensemble autour d'un axe 19 de manière à remonter l'ensemble sur le navire.

## Revendications

1. Dispositif de ramassage de produits flottants sur une étendue liquide comportant au moins un organe séparateur (2) et un organe collecteur (3) entraînés par le déplacement d'un bateau (1), caractérisé en ce que ledit organe séparateur (2) est constitué par une structure en forme de plaque étroite et allongée s'étendant à l'extérieur du bateau et faisant par rapport au sens d'avancement du bateau un angle aigu $\theta$, ladite plaque étant associée avec des moyens (14, 15) permettant de la maintenir partiellement immergée, sur une partie de sa largeur et étant penchée d'un angle $\alpha$ par rapport à la surface de l'eau, l'organe collecteur (3) comportant au moins une gouttière (3) placée contre le flanc du bateau (1) et communiquant avec une capacité.

2. Dispositif selon la revendication 1, caractérisé en ce que ladite plaque (2) est plane.

3. Dispositif selon la revendication 1, caractérisé en ce que ladite plaque est vrillée sur sa longueur de façon à faire varier ledit angle $\alpha$ sur la longueur de ladite plaque.

4. Dispositif selon la revendication 1, caractérisé en ce que ladite gouttière (3) comporte une première partie (4) légèrement inclinée sur l'horizontale s'abaissant de l'avant vers l'arrière par rapport au sens d'avancement du bateau (1) et une seconde partie (5) sensiblement verticale se raccordant à l'extrémité arrière de la première partie (4).

5. Dispositif selon l'une des revendication précédentes, caractérisé en ce qu'un dit organe séparateur et un dit organe collecteur sont placés des deux côtés du bateau.

6. Dispositif selon la revendication 4, caractérisé en ce que ladite gouttière est percée de petits orifices.

## Patentansprüche

1. Vorrichtung zum Sammeln von auf der Oberfläche einer Flüssigkeit schwimmenden Produkten, die mindestens ein Trennorgan (2) und ein Sammelorgan (3) aufweist, die durch die Bewegung eines Schiffes (1) vorwärtsbewegt werden, dadurch gekennzeichnet, daß das Trennorgan (2) aus einer Struktur in Form einer schmalen und langgestreckten Platte besteht, die sich außerhalb des Schiffes erstreckt und in Bezug auf die Bewegungsrichtung des Schiffs einen spitzen Winkel $\theta$ bildet und Mitteln (14, 15) zugeordnet ist, die es ermöglichen, sie teilweise über einen Teil ihrer Breite untergetaucht zu halten, wobei die Platte um einen Winkel $\alpha$ in Bezug auf die Wasseroberfläche geneigt ist und das Sammelorgan (3) eine Abflußrinne (3) aufweist, die an der Flanke des Schiffs (1) angebracht ist und mit einem Sammelraum verbunden ist.

2. Vorrichtung nach Anspruch 1, dadurch gekennzeichnet, daß die Platte (2) eben ist.

3. Vorrichtung nach Anspruch 1, dadurch gekennzeichnet, daß die Platte über ihre Länge spiralförmig ist, so daß der Winkel $\alpha$ über die Länge dieser Platte variiert.

4. Vorrichtung nach Anspruch 1, dadurch gekennzeichnet, daß die Abflußrinne (3) einen leicht zur Waagerechten geneigten ersten Teil (4) aufweist, der sich von vorne nach hinten in Bezug auf die Bewegungsrichtung des Schiffs (1) absenkt, und einen zweiten Teil (5), der im wesentlichen senkrecht ist und an das hintere Ende des ersten Teils (4) anschließt.

5. Vorrichtung nach einem der vorstehenden Ansprüche, dadurch gekennzeichnet, daß je ein Trennorgan und ein Sammelorgan sich an den beiden Seiten des Schiffs befinden.

6. Vorrichtung nach Anspruch 4, dadurch gekennzeichnet, daß die Abflußrinne mit kleinen Öffnungen versehen ist.

## Claims

1. A device for collecting products floating on the surface of a liquid, comprising at least one separating means (2) and a collecting means (3) driven by the movement of a ship (1), characterized in that said separating means (2) is constituted by a narrow and elongated plate structure extending outside of the ship and making an acute angle $\theta$ with respect to the direction of movement of the ship, said plate being associated to means (14, 15) which allow this plate to be held partially immersed over a part of its width, and being inclined at an angle $\alpha$ with respect to the surface of the water, the collecting means (3) comprising at least one gutter (3) placed against the side of the ship (1) and communicating with a cavity.

2. A device according to claim 1, characterized in that said plate (2) is even.

3. A device according to claim 1, characterized in that said plate is spiral-shaped over its length in order to make said angle $\alpha$ vary with the length of said plate.

4. A device according to claim 1, characterized in that said gutter (3) comprises a first part (4) which is slightly inclined on the horizontal plane sloping from the front to the back with respect to the direction of movement of the ship (1), and a second part (5) essentially vertical and connected to the rear end of the first part (4).

5. A device according to one of the preceding claims, characterized in that a said separating means and a said collecting means are placed on both sides of the ship.

6. A device according to claim 4, characterized in that said gutter is provided with small holes.

FIG.1

F

3

3

III

III

2

θ

2

FIG.2

1

5

6 3

4

FIG.3

1

2

α

# FIG.4

# FIG.5